# DEMANDE DE BREVET EUROPEEN

(11) **EP 0 911 709 A2**
(43) Date de publication de la demande: **28.04.1999**
(21) Numéro de dépôt: 98500196.5
(22) Date de dépôt: 04.09.1998
(51) Int. Cl.: G05B 19/042

(54) **Système domestique pour le contrôle intelligent de l'habitat**

(30) Priorité: 21.10.1997 ES 9702169
(71) Demandeur: Fabrica Electrotecnica Josa, S.A., 08191 Rubi (Barcelona) (ES)
(72) Inventeur: Garcia Grassa, José Luis, 08191 Rubi (Barcelona) (ES)
(74) Mandataire: Morgades Manonelles, Juan Antonio

(57) **Abrégé**

Le système domotique (10) se compose d'un câble ou bus (15) qui devra parcourir toute l'installation, grâce à quoi il forme d'abord un système ouvert. Sur le câble ou bus (15) sont greffés, d'un côté, des modules spéciaux (12), (13) et (14), qui représentent les différentes possibilités du système opérationnel, soit à travers les ordres reçus d'un ordinateur (11) en programmant le module (13), soit par d'autres systèmes différents, non dirigés par un ordinateur (11) et qui auraient comme base de fonctionnement des signaux de type infrarouge, comme le module (12) ou bien un autre type de signal, qui pourrait être celui qui serait représenté dans un module (14) par une base de temps ou à partir de signaux plus ou moins importants d'une certaine fréquence.

## Description

La présente demande de Brevet d'Invention consiste, comme son énoncé l'indique, en un "SYSTEME DOMOTIQUE POUR LE CONTROLE INTELLIGENT DE L'HABITAT", dont les caractéristiques de construction, conformation et conception remplissent, avec un maximum de sécurité et d'efficacité, la mission pour laquelle il a été spécifiquement projeté.

Il existe sur le marché - et ils peuvent donc être considérés comme Etat de la Technique - des systèmes domotiques divers, sans qu'aucun de ceux-ci ne domine nettement par rapport aux autres. Il existe des modules, dans ces systèmes très simples, qui se limitent à contrôler un nombre réduit de canaux. Par exemple, l'entreprise EUROCABLE dispose du module EIVm qui réalise un contrôle type PLC avec quatre canaux, à l'aide de plusieurs temporisateurs, dont la mission est de gérer correctement l'énergie que consomment différents appareils électroménagers dans l'habitat, tout en intégrant des alarmes et un portier électronique.

D'autres entreprises créent des modules similaires pour contrôler certains circuits de la maison et de l'habitat à travers la ligne téléphonique.

On trouve également sur le marché l'objet du brevet nº 9602489 du même titulaire, dont le titre est "Système de contrôle intelligent pour logements", qui présente quelques-unes des caractéristiques des brevets antérieurs, mais avec une plus grande possibilité d'entrées et de sorties et qui est aussi programmable à partir d'un PC. L'objet de ce brevet consiste, essentiellement, en une unité centrale qui contrôle toutes les entrées et sorties par l'intermédiaire de modules connectés en forme d'anneau.

Ce système, celui du brevet nº 9602489 offre l'avantage d'être très simple, parce que les éléments qui le composent sont eux-mêmes simples. La complexité se concentre en un seul point, l'unité centrale de contrôle, qui est celle qui gère tout le système et se charge d'entrer en communication avec le reste du réseau. Cependant, cette simplicité qui se traduit par le prix peu élevé de ses composants, présente par ailleurs certaines limitations, comme par exemple :
- Il existe des problèmes de câblage du fait d'un réseau en anneau à partir de l'unité centrale, ce qui rend le câblage coûteux, tout en provoquant une difficulté d'installation. Il n'est pas facile, en raison de sa structure de communications rigide, d'ajouter de nouvelles applications, à savoir, qu'on peut difficilement l'agrandir et par conséquent, qu'il s'agit d'un système peu flexible.

C'est un système fermé, peu susceptible d'extension et limité. La dimension du système est délimitée par la capacité de l'unité centrale de contrôle.

Il est peu résistant, du fait que toute l'intelligence se concentre en un seul point; si ce point, c'est-à-dire l'unité centrale de contrôle, a une défaillance, c'est l'ensemble qui tombe en panne, avec des conséquences imprévisibles pour l'utilisateur, puisque, pour ainsi dire, tout se trouve hors de contrôle, lorsque le point de référence, ladite unité centrale, cesse d'être opérationnelle.

En raison de sa complexité, l'unité centrale est très chère, ce qui implique un premier investissement d'un coût élevé. Cet investissement doit s'effectuer, que l'on veuille seulement un système très simple (par exemple, un couple d'ampoules qui s'allument automatiquement) ou qu'il s'agisse d'utiliser toute la puissance que le système admet, c'est-à-dire que dans tous les cas, l'unité centrale sera forcément la même.

Les systèmes domotiques de pointe, outre le fait d'effectuer les communications à travers un bus, attribuent de l'intelligence à chaque noeud, de telle sorte que chacun puisse réaliser ses tâches de contrôle. Pour ajouter un élément au système, il suffit de le connecter au bus, lequel consiste en une paire de câbles répartis dans toute la maison. Le noeud est capable de se configurer lui-même et de se faire connaître de tous les autres noeuds du système d'une manière totalement automatique.

Dans le cas du système précédent, le concept d'unité centrale disparaît, concept qui sert de base à la plupart des systèmes existant sur le marché, lesquels, même en présentant des variations essentielles, se configurent ou reçoivent une architecture dans laquelle l'unité centrale est celle qui dirige tout, comme par exemple dans le cas du brevet susmentionné nº 9602489.

Un exemple de réalisation décentralisée d'un système domotique serait par exemple celle où les capteurs situés dans une pièce pourraient transmettre au réseau le message qu'il se trouve une personne ou un animal dans cette pièce. Les actionneurs des ampoules recueilleraient cette information et connecteraient l'éclairage, si c'était le programme prévu. Il serait possible de reprogrammer tout élément à partir de n'importe quel point du réseau, sans avoir à reprogrammer l'unité centrale.

Autre avantage du système précédent, c'est que l'on peut disposer du nombre de noeuds que l'on veut (on pourrait par exemple penser à un système se composant seulement de deux noeuds) et que l'on peut ajouter autant de noeuds que l'on voudra. Les principaux avantages en sont les suivants :
- Le système décentralisé est fiable et ne cesse pas de fonctionner en raison de problèmes ponctuels. Il est possible de faire un diagnostic du réseau à partir d'un point quelconque de celui-ci.
- Il s'agit d'un système flexible, non assujetti à une unité centrale. On peut monter un système aussi réduit qu'on le voudra, sans qu'il existe l'obligation de faire un investissement important et, ensuite, l'agrandir pratiquement sans limite aucune. Chaque fois qu'on le voudra, on peut ajouter des éléments au système, très facilement et à prix modéré.
- Le câblage est simplifié, puisque ce sont seulement deux fils qui courent dans toute la maison. Son installation est plus facile et elle évite des connexions erronées, à même de provoquer des dégâts dans le système.
- Les noeuds étant plus intelligents, cela simplifie la tâche de l'installateur qui doit tenir compte d'un nombre plus réduit de paramètres, ce qui diminue les risques d'erreur.
- Son design initial est plus complexe.

Un autre aspect dont il faut tenir compte dans ce type de système est celui du design, dans un système domotique, celui de sa topologie. La topologie est la manière dont les différents éléments du système se connectent entre eux au niveau physique. Les topologies les plus courantes, connues jusqu'à présent, sont celles en étoile, en bus, en anneau et libre. Cet aspect, celui de la topologie, est important parce qu'il influe directement sur le coût du câblage et sur la facilité d'installation. Bien que toutes ces diverses topologies aient leurs avantages et leurs inconvénients, celles qui s'adaptent le mieux aux finalités du système préconisé sont, comme on l'explique ci-après, les topologies du type bus et libre.

La topologie en étoile est celle dans laquelle tous les éléments s'assemblent à travers un seul point central, avec l'avantage que si une liaison est rompue, on ne perd qu'un noeud, tous les autres restant opérationnels. Par contre, ce système implique un coût élevé du câblage, parce que tous les éléments sont assemblés en un point central, ce qui rend nécessaire qu'un câble parte de chacun d'entre eux et qu'il arrive jusqu'au point commun de connexion.

En ce qui concerne l'installation, ce type de topologie la rend énormément difficile, parce qu'on doit faire passer le câble qui sort de chaque élément dans toutes les pièces qu'il faudra pour pouvoir enfin atteindre le point où s'effectue l'ensemble des connexions.

Quant à la topologie du type bus, celle-ci consiste en un câble (bus) principal qui parcourt toute la disposition physique du réseau et sur lequel sont greffés, à courte distance et un par un, tous les éléments.

Comme avantage à souligner, il faut indiquer la flexibilité de l'installation. Le fait qu'il existe un câble principal sur lequel sont greffés tous les éléments facilite l'installation, parce que l'on peut parcourir toutes les pièces à l'aide d'un seul câble et installer sur celui-ci les différents noeuds du réseau. Par ailleurs, il existe un totale flexibilité par rapport à un agrandissement postérieur de la première installation. L'introduction de nouveaux éléments à l'intérieur du réseau est en effet facilitée, puisqu'il suffit de fixer cet élément sur la section du bus qui passera le plus près et sur lequel on veut l'installer. Finalement, le coût du câblage est pratiquement celui de la longueur de câble nécessaire et qui correspond à celle du bus principal, ce qui représente une longueur beaucoup plus réduite que celle qui est nécessaire pour la topologie en étoile.

Comme inconvénient principal, il faut mentionner la fragilité par rapport aux coupures. Si le bus est coupé en un point déterminé, la connexion est perdue entre les éléments qui se trouvent des deux côtés du réseau.

La topologie en anneau consiste en un bus principal, mais à la différence du système précédent, c'est-à-dire, la topologie du type bus, elle est fermée sur elle-même. Comme dans le cas précédent, tous les éléments sont greffés sur le bus, à courte distance. L'avantage le plus remarquable en est que, si le bus est coupé en un point déterminé, une connexion continue à exister entre tous les éléments, grâce à la liaison fermée que celui-ci forme. En ce qui concerne l'agrandissement, de même que dans le cas de la topologie type bus, l'élargissement du réseau est très facile, puisqu'il suffit de greffer le nouvel élément sur la section du bus le plus proche. L'inconvénient majeur dans ce type de topologie correspond au coût du câblage, bien que ce ne soit pas aussi accusé que dans le cas de la topologie en étoile, le coût du câblage ici est en effet le double de celui de la topologie type bus.

Finalement, la topologie libre est une combinaison de tous les cas précédents; si l'on part de l'extrémité d'un bus principal, dans cette configuration on peut le diviser et le faire bifurquer quand il le faudra, en créant ainsi un réseau principal de base sur lequel viendra se greffer chacun des éléments.

Ce qui implique comme avantage une flexibilité tant au niveau de l'installation que dans l'élargissement du réseau. Dans cette configuration, non seulement il est possible, comme dans la topologie du type bus, d'introduire n'importe quel élément nouveau, mais aussi, si besoin est, on peut ramifier le bus principal du réseau à partir d'un endroit quelconque pour le faire arriver là où il conviendra. En référence au coût du câblage, à cause de la flexibilité que cette topologie permet, on peut concevoir le réseau de n'importe quelle façon, pour arriver à ce que le coût en câble soit le plus réduit possible.

Quant à l'avantage du système de topologie libre, en fonction de la structure du réseau projeté, il pourrait se faire que celle-ci soit fragile par rapport à des coupures survenant dans le bus. De toute façon, puisque son design est flexible, elle peut être structurée de façon à être redondante et résistante par rapport à toute coupure, ce qui impliquerait toutefois un coût plus élevé en câblage.

Comme on a pu le voir lors de la description des topologies précédentes avec leurs avantages et leurs inconvénients, il existe une opposition nette entre la résistance du réseau par rapport aux coupures et le coût du câblage. Cependant, si l'on analyse l'environnement dans lequel le réseau est installé, à l'intérieur de la maison, le risque de coupure est très faible et le prix de l'installation prend alors plus de poids. Si bien que les principales exigences que l'on requiert d'une topologie prévue pour un réseau domotique correspondent au prix du câblage, à la facilité d'installation et à la flexibilité permettant de faire face à de futurs agrandissements, exigences qui trouvent un meilleur niveau de satisfaction dans la topologie type bus et dans la topologie libre.

Un autre aspect technique des systèmes domotiques à envisager est celui de leur contrôle; comme dans tout réseau de contrôle, il faut établir une distinction entre deux types : le contrôle des communications et le contrôle du système général. De cette façon, au moment de la conception du système, il existe plusieurs possibilités; on peut choisir entre un contrôle des communications centralisé ou distribué d'un côté et entre un contrôle du système centralisé ou distribué de l'autre côté.

Dans ce secteur technique déterminé, le contrôle des communications est généralement envisagé par contrôle centralisé, une configuration impliquant l'existence d'une unité centrale de communications qui gère les interconnexions des différents noeuds du réseau. Tandis qu'un contrôle des communications distribué est une configuration qui, différant en cela de la précédente, ne requiert aucune unité centrale et chaque élément ou noeud du réseau est capable d'accéder au moyen et d'entrer lui-même en communication avec tout autre noeud du réseau.

En ce qui concerne le contrôle du système, il existe aussi deux types différents de contrôle. Le centralisé, dans lequel, comme dans le cas du contrôle des communications, il faut obligatoirement disposer d'une unité centrale qui gère tout le système. Dans ce cas, les différents éléments du réseau servent uniquement à recueillir des données, comme par exemple, la température, l'existence d'une présence, la pression d'un interrupteur et autres renseignements similaires, ou bien à agir, c'est-à-dire, allumer une ampoule, remonter un store, déclencher une sonnerie, etc., l'unité centrale de contrôle étant celle qui se charge de gérer tout le système à partir des données reçues en provenance des différents éléments d'entrée, qu'il s'agisse de capteurs, d'interrupteurs ou de boutons-poussoirs.

Par contre, le système de contrôle distribué est fondé sur une configuration dans laquelle, contrairement à la précédente, chaque élément du réseau est capable de décision et où une unité centrale de gestion n'est donc pas nécessaire; dans ce cas, chaque élément comprend une série d'entrées déjà définies, à partir desquelles, par l'intermédiaire d'un programme de contrôle interne, on peut déclencher les actions voulues. Ce type de contrôle permet, grâce à l'interconnexion de plusieurs éléments, d'exécuter des tâches extrêmement compliquées à partir de tâches individuelles (de chaque élément) très faciles et très simples.

Il est bon de souligner que la plupart du temps ces deux types de contrôle sont intimement liés et qu'il est difficile de les distinguer. Il existe ainsi la possibilité que l'unité de contrôle centrale du système soit aussi celle qui est chargée de gérer les communications ou que, dans un système conçu de telle sorte que le contrôle des communications sera distribué, chaque noeud soit suffisamment intelligent pour que le système n'ait pas besoin d'un élément central de contrôle.

Le système domotique préconisé dans la présente invention a pour base un système dans lequel il existe un contrôle distribué, tant au niveau des communications qu'à celui de gestion du système général, et ce en raison de la flexibilité que cette combinaison implique et dont les avantages ont été expliqués plus haut. Il faut toutefois mentionner que dans ce système, il existe un élément de gestion qui facilite la reconfiguration du réseau, sans que cela constitue ppour autant un obstacle incontournable.

La raison pour laquelle ce type de contrôle a été choisi pour le système préconisé est claire et définitive : la flexibilité. Le design d'un système réalisé avec ces caractéristiques va offrir la possibilité d'élargir celui-ci d'une manière facile et simple, en accroissant sa puissance sans que le coût en soit augmenté dans la même proportion. Alors que, dans le cas d'un système comportant un contrôle central quelconque, comme ceux qui appartiennent au type décrit dans le brevet du même titulaire nº 9602489.5, il faut obligatoirement multiplier par deux l'unité centrale, chaque fois que le nombre maximum d'éléments que celui-ci supporte sera dépassé, ce qui entraîne un coût élevé; dans un système distribué, il suffit juste d'ajouter un nouveau noeud, ce qui est toujours moins coûteux qu'une unité centrale. Finalement, faisons remarquer qu'un système avec contrôle centralisé implique une topologie en étoile, puisque tous les éléments du système doivent être en communication avec l'unité centrale; or, cette topologie est écartée en raison du coût élevé de câblage que cela représente et d'un manque de flexibilité dans l'installation comme par rapport à une extension éventuelle, ce que nous avons déjà expliqué précédemment.

Le système domotique préconisé, comme il sera décrit plus loin, comprend des modules spéciaux; ces modules pourront disposer de techniques de travail différentes, par exemple être commandés à l'aide d'un système de commande par rayons infrarouges, à travers la programmation d'une C.P.U. classique et avec l'aide d'un ordinateur, avec une base de temps et autres éléments similaires, ces modules étant connectés au bus, qui est lui-même alimenté par 24-48 volts en courant continu et avec une alimentation extérieure d'une puissance de 125-230 volts pour les éléments soumis au contrôle. Un ensemble de noeuds est "greffé" sur le bus, ensemble dont les caractéristiques seront décrites plus loin, et de chaque noeud partent une série de conducteurs dont le but est d'assurer la liaison du contrôle d'une série de services, comme par exemple l'ouverture ou la fermeture de certains circuits électriques, l'allumage ou l'extinction d'éclairages divers, l'extinction, l'allumage ou le réglage de combustibles et l'ouverture ou la fermeture de soupapes à travers lesquelles peuvent passer différents types de fluide, tels que l'eau, le gaz, entre autres.

D'autres détails et diverses caractéristiques de la demande actuelle de Brevet d'Invention seront mis en évidence au cours de la description que l'on en fait plus loin et dans laquelle il est fait référence aux dessins qui accompagnent ce mémoire, dessins où, d'une manière un peu schématique, les détails retenus sont représentés. Ces détails sont donnés à titre d'exemple, en référence à un cas possible de réalisation pratique, mais ceux que l'on expose ici ne constituent aucune limitation pour l'invention elle-même; cette description doit donc être envisagée d'un simple point de vue démonstratif et exempt de limitations d'aucune sorte.

Nous allons maintenant donner la liste des divers éléments numérotés sur les dessins qui sont joints au présent mémoire : (10) système, (11) ordinateur, (12) modules d'accès IR spéciaux, (13) modules d'accès et de contrôle spéciaux, (14) modules spéciaux, (15) bus, (16) source d'alimentation en courant continu, (17) ligne d'alimentation en courant alternatif, (18) noeuds, (19) noeuds, (20) interrupteurs, (21) éclairages, (22) gaz, (23) soupapes, (24) noeud de contrôle, (25) puce intelligente, (26) module de mémoire, (27) transcepteur, (28) connecteurs, (29) interfaces, (30) bobine, (31) source de puissance.

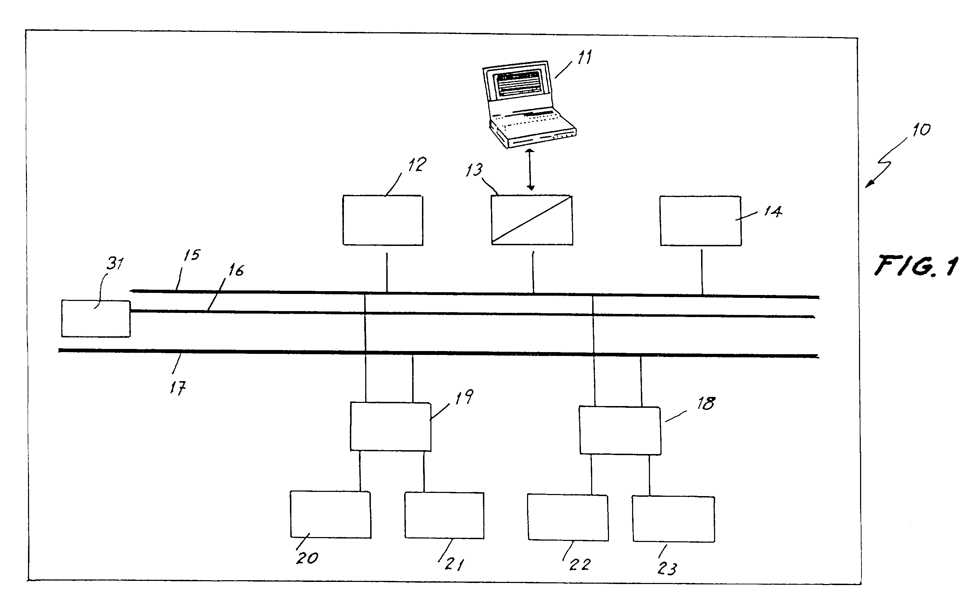

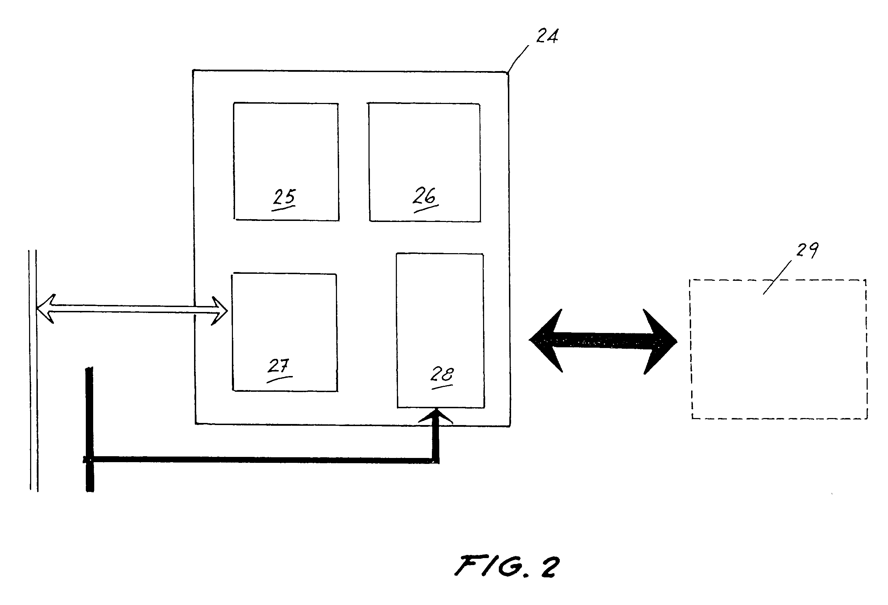

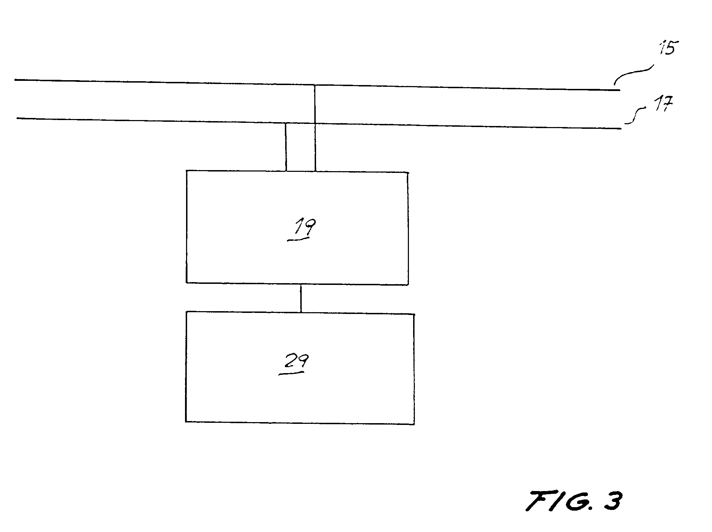

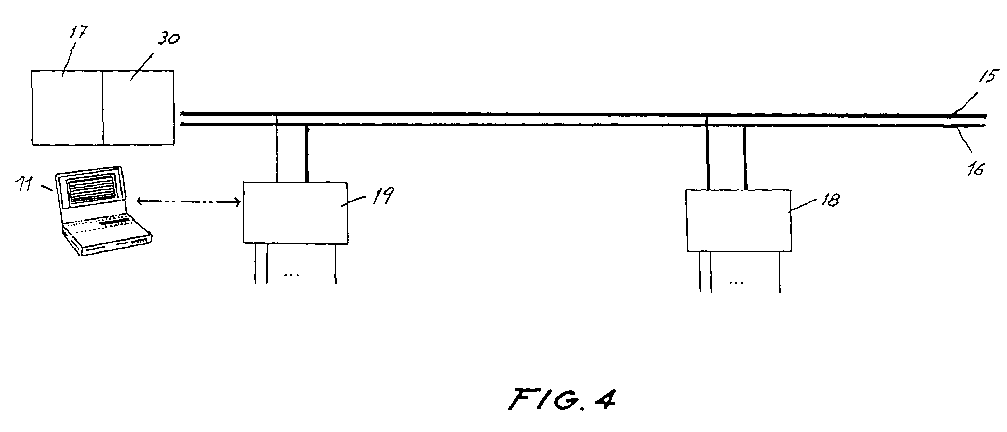

La figure nº 1 représente un diagramme de blocs où figure le système domotique (10) préconisé.

La figure nº 2 représente un diagramme de blocs d'un noeud de contrôle (24), du type de ceux qui sont employés dans le système (10) décrit à la figure nº 1.

La figure nº 3 correspond à un exemple de schéma de connexion d'entrées et de sorties dans le système (10), à partir d'un bus de données (15), avec une alimentation de puissance (17) et de là vers des noeuds et des interfaces (29).

La figure nº 4 est le schéma d'un exemple du système (10), où l'on peut voir comment, à travers le bus (15) et l'alimentation du système en courant continu (16), à l'aide d'une ligne de courant alternatif (17) et d'une bobine (30), la programmation des noeuds de contrôle (18) et (19) s'effectue à travers un ordinateur (11).

Dans l'une des réalisations retenues, qui fait l'objet du présent brevet d'invention, et comme on peut le voir sur la figure nº 1, le système domotique (10) se compose d'un câble ou bus (15) qui devra parcourir toute l'installation, grâce à quoi il forme d'abord un système ouvert.

Sur le câble ou bus (15) sont greffés, d'un côté, des modules spéciaux (12), (13) et (14), qui représentent les différentes possibilités du système opérationnel, soit à travers les ordres reçus d'un ordinateur (11) en programmant le module (13), soit par d'autres systèmes différents, non dirigés par un ordinateur (11) et qui auraient comme base de fonctionnement des signaux de type infrarouge, comme le module (12) ou bien un autre type de signal, qui pourrait être celui qui serait représenté dans un module (14) par une base de temps ou à partir de signaux plus ou moins importants d'une certaine fréquence.

Ce qui revient à dire que le système domotique (10), outre le fait d'être ouvert, peut obéir à des programmations comportant des signaux de différent type, comme un signal infrarouge, une C.P.U. ou une base de temps.

Dans le premier cas, à l'aide d'une simple télécommande, IR agirait sur le module (12). Dans le deuxième cas, ce serait un ordinateur (11) qui programmerait le module (13) et sa C.P.U. Enfin, le module (14) pourrait être tout autre système capable d'être programmé.

Sur le bus (15), par l'intermédiaire d'une connexion directe, sont greffés plusieurs noeuds, par exemple (18) et (19), lesquels contrôlent directement les entrées et les sorties à travers leur propre programmation et les ordres reçus en provenance des modules spéciaux (12), (13) ou (14).

Dans ce système domotique, les noeuds travaillent d'une façon indépendante et ils agissent sur une grande variété d'éléments, comme interrupteurs (20), éclairages (21), systèmes de combustion du type gaz (22) et ouverture ou fermeture de soupapes (23).

L'alimentation du système domotique (10) dispose de deux sources distinctes, une source pour le système lui-même, que l'on pourrait qualifier de source interne (16), à base d'une alimentation en courant continu de 24-48 volts; et une alimentation externe (17) ou ligne de puissance extérieure, capable d'alimenter en courant alternatif tous les éléments du système qui le nécessiteraient, comme éclairages, interrupteurs et autres dispositifs qui aideraient ou justifieraient la combustion d'éléments du type gaz, par exemple (22), de soupapes d'ouverture ou de fermeture, telles que (23).

Les noeuds, par exemple (18) et (19) de la figure nº 1, comme on peut l'observer sur la figure nº 2, disposeront de cartes de contrôle (24), qui à leur tour intégreront une puce intelligente (25), un module de mémoire (26), un transcepteur (27) et des connecteurs (28), le noeud de contrôle (24) recevant l'alimentation en courant alternatif d'une source (31) et étant par ailleurs greffé sur le bus (15), comme il a été indiqué précédemment. Le noeud de contrôle, comme on peut l'observer sur cette figure, maintiendra une connexion dans les deux sens avec les interfaces (29) d'entrée et de sortie et directement vers les éléments soumis à un contrôle par (10), par exemple (20, (21), (22) et (23).

Un schéma simple de connexion d'entrées et de sorties du système (10) est celui que l'on peut voir sur la figure nº 3, dans lequel sur le bus (15) et sur le système d'alimentation (16) et (17) sont greffés les noeuds (24) et les interfaces (29), ce qui, en coïncidence avec les caractéristiques précédentes, permet la totale indépendance du système (10), du fait que sur ce bus (15) et à l'aide de l'alimentation correspondante, on peut, soit sur le système, soit sur les appareils qui contrôlent le système, installer, sans altérer celui-ci, tous les noeuds (24) que l'on voudra avec leurs interfaces correspondantes (29), sans que le reste du système en soit aucunement modifié, puisque le seul détail technique dont il faudra tenir compte au moment de procéder à l'extension de ce système (10) sera la reprogrammation des modules spéciaux par exemple, ceux du type (13), lesquels à leur tour auront une incidence sur les noeuds indiqués précédemment.

Une des nombreuses possibilités du système est celle qui est représentée sur la figure nº 4, dans laquelle on a décidé que les noeuds (18) et (19) ainsi que beaucoup d'autres pouvant être installés sur le bus (15) et sur l'alimentation du système en courant continu (16) seront programmés, à travers l'ordinateur correspondant (11) et par l'intermédiaire d'une seule ligne de puissance (17) et de la bobine correspondante (30), pour arriver à supporter 16 230 noeuds de plus, comme il a été vérifié expérimentalement; ce qui donne une idée des possibilités et des combinaisons éventuelles de ce système domotique (10), qui associe à sa capacité de reprogrammation une énorme variété de possibilités en matière d'extension du système avec un nombre infini de noeuds, avec juste l'obligation de reprogrammer les noeuds (18) et (19) et autres éléments similaires à travers l'ordinateur (11).

Après une description suffisamment explicite du présent Brevet en concordance avec les plans ci-joints, il est facile de voir que l'on pourra y introduire toutes les modifications de détail que l'on jugera opportunes, pourvu que les variations préconisées ne modifient en rien l'essence du brevet, qui est résumée dans les revendications suivantes :

## Revendications

1. "SYSTEME DOMOTIQUE POUR LE CONTROLE INTELLIGENT DE L'HABITAT", de ceux qui sont formés par une topologie du type bus ou bien libre en référence à l'interconnexion physique des différents éléments du système (10) et caractérisé par le fait que le système (10) est configuré à partir d'un bus ou câble (15), lequel parcourt toute l'installation qui dirige ce système, avec un contrôle de communications et du système de type distribué et auquel sont associés des modules spéciaux du type (12), (13) ou (14), qui servent à programmer des noeuds de type (18) et (19), lesquels sont greffés directement et indépendamment les uns par rapport aux autres sur le bus (15), le système (10) s'alimentant de façon interne grâce à des courants continus de 24-48 volts et de façon externe, c'est-à-dire par rapport aux éléments de l'installation, grâce à une source de puissance (31) de 110-220 volts en courant alternatif, les entrées et les sorties de tout le système étant connectées, d'une manière indépendante, aux noeuds (18) et (19).

2. "SYSTEME DOMOTIQUE POUR LE CONTROLE INTELLIGENT DE L'HABITAT", caractérisé, conformément à la 1^{re} revendication, par le fait que le système (10) pourra utiliser les modules (12, (13) ou (14) de différent type de signal, comme par exemple signaux infrarouges, obéissant à un autre système ou un type de télécommande de même nature, de programmation d'une C.P.U. à travers un ordinateur (11) ou à travers une base de temps (14) ou de fréquences de grandeurs déterminées.

3. "SYSTEME DOMOTIQUE POUR LE CONTROLE INTELLIGENT DE L'HABITAT", caractérisé, conformément à la 1^{re} et à la 2^{e} revendication, par le fait que les noeuds de contrôle du type (18), (19) ou (24) seront tous formés d'une puce intelligente (25), d'un module de mémoire (28), le tout connecté aux interfaces d'entrée et de sortie (29), ces noeuds étant greffés sur le bus de données (15) et alimentés à l'intérieur par un courant continu de 24-48 volts.

4. "SYSTEME DOMOTIQUE POUR LE CONTROLE INTELLIGENT DE L'HABITAT", caractérisé, conformément aux revendications précédentes, par le fait que la programmation des noeuds (18), (19) et éléments similaires se fera à travers les modules spéciaux (12), (13) ou (14), interrupteurs (20), éclairages (21), contrôle d'incendie (22) ou autre et contrôle de soupapes (23) se trouvant greffés de façon isolée et indépendante sur (18) et (19).

5. "SYSTEME DOMOTIQUE POUR LE CONTROLE INTELLIGENT DE L'HABITAT", caractérisé, conformément aux 4 revendications précédentes, par le fait que les noeuds (18) et (19) pourront en alternance être programmés directement à partir d'un ordinateur (11).
